# EUROPÄISCHE PATENTSCHRIFT

(11) **EP 2 255 553 B1**
(45) Veröffentlichungstag und Bekanntmachung des Hinweises auf die Patenterteilung: **09.11.2016**
(21) Anmeldenummer: 09722471.1
(22) Anmeldetag: 16.03.2009
(51) Int. Cl.: H04W 4/08, H04W 8/18, H04W 84/08

(54) **INTERGRUPPENKOMMUNIKATION IN EINEM KOMMUNIKATIONSNETZWERK**
INTERGROUP COMMUNICATION IN A COMMUNICATION NETWORK
COMMUNICATION ENTRE GROUPES AU SEIN D'UN RÉSEAU DE COMMUNICATION

(30) Priorität: 20.03.2008 DE 102008015233
(43) Veröffentlichungstag der Anmeldung: 01.12.2010
(73) Patentinhaber: Hytera Mobilfunk GmbH, 31848 Bad Münder (DE)
(72) Erfinder: KLAUSING, Matthias, 31832 Springe (DE)
(74) Vertreter: Körfer, Thomas
(86) Internationale Anmeldenummer: PCT/EP2009/001890
(87) Internationale Veröffentlichungsnummer: WO 2009/115259

(56) Entgegenhaltungen:
- EP-A- 1 841 263
- WO-A-2007/061234
- US-A1- 2004 098 455
- US-A1- 2006 058 007

## Beschreibung

Die Erfindung betrifft ein Kommunikationssystem und ein Verfahren zur Kommunikation in einem

Kommunikationsnetzwerk, insbesondere in einem Tetra-Kommunikationsnetzwerk.

Herkömmlich werden zur Kommunikation innerhalb von einzelnen Organisationen, wie z.B. der Polizei, dem Katastrophenschutz oder dem Militär eigene Kommunikationsnetzwerke eingesetzt. Diese sind jedoch üblicherweise nicht kompatibel. Bei Einsatz eines gemeinsamen Kommunikationsnetzwerks ist eine Regelung der zulässigen Kommunikationsbeziehungen nicht bekannt. So sind organisatorisch ungewollte Kommunikationsvorgänge möglich.

Die Offenlegungsschrift DE 10 2006 014 409 A1 zeigt ein Kommunikationssystem und Verfahren für

Gruppenkommunikationsanwendungen. Dabei sind unterschiedliche Kombinationen von Teilnehmern möglich.

Eine geregelte Kommunikation zwischen verschiedenen Organisationen ist jedoch nicht offenbart.

Die Offenlegung US2006/0058007 zeigt ein Kommunikationssystem und Verfahren, wobei jeder Gruppe von Teilnehmern eine Leitstelle zugewiesen ist, die für Berechtigung zu Kommunikationsaufgaben der Teilnehmer verantwortlich ist.

Der Erfindung liegt die Aufgabe zu Grunde, ein Kommunikationssystem und ein Verfahren zur Kommunikation zu schaffen, welche eine flexible und effiziente Kommunikation innerhalb von Organisationen und zwischen Organisationen ermöglichen.

Die Aufgabe wird erfindungsgemäß für die Vorrichtung durch die Merkmale des unabhängigen Anspruchs 1 und für das Verfahren durch die Merkmale des unabhängigen Anspruchs 13 gelöst. Vorteilhafte Weiterbildungen sind Gegenstand der hierauf rückbezogenen Unteransprüche.

Ein Kommunikationssystem verfügt erfindungsgemäß über ein Kommunikationsnetzwerk, mehrere Teilnehmer, mehrere Teilnehmergruppen und, jeder Teilnehmergruppe zugeordnet, zumindest eine Leitstelle. Jeder Teilnehmer ist genau einer Teilnehmergruppe zugeordnet. Jede Teilnehmergruppe kann über mehrere Gast-Teilnehmergruppen verfügen. Jeder Teilnehmer verfügt über individuelle Berechtigungen zu verschiedenen Kommunikationsaufgaben mit bestimmten Teilnehmern und/oder Gast-Teilnehmergruppen aus bestimmten Teilnehmergruppen. Die Bestimmung der Berechtigungen und/oder die Zuweisung von Teilnehmern zu Teilnehmergruppen und/oder Gast-Teilnehmergruppen erfolgt durch die den Teilnehmergruppen zugeordneten Leitstelle. So ist eine flexible Kommunikation bei klaren Kommunikationsberechtigungen der einzelnen Teilnehmer gegeben.

Jedem Teilnehmer ist bevorzugt zumindest eine Teilnehmer-Identifikationsnummer zugeordnet. Jeder Teilnehmergruppe ist bevorzugt genau eine Teilnehmergruppen-Identifikationsnummer zugeordnet. Jeder Gast-Teilnehmergruppe ist bevorzugt genau eine Gast-Teilnehmergruppen-Identifikationsnummer zugeordnet. Eine eindeutige Zuordnung der Teilnehmer, Teilnehmergruppen und Gast-Teilnehmergruppen ist so möglich.

Jedem Teilnehmer ist vorteilhafterweise die Teilnehmergruppen-Identifikationsnummer der ihm zugewiesenen Teilnehmergruppe zugewiesen. Jedem Teilnehmer, welcher über eine Berechtigung zu einer bestimmten Kommunikationsaufgabe mit einer bestimmten Gast-Teilnehmergruppe aus einer bestimmten Teilnehmergruppe verfügt, ist vorteilhafterweise die jeweilige Gast-Teilnehmergruppen-Identifikationsnummer zugewiesen. Die Zugehörigkeit von Teilnehmern zu Teilnehmergruppen und Gast-Teilnehmergruppen ist so eindeutig feststellbar.

Eine Kommunikation mit einem Teilnehmer erfolgt bevorzugt mittels der ihm zugewiesenen Teilnehmer-Identifikationsnummer. Eine Kommunikation mit einer Gast-Teilnehmergruppe erfolgt bevorzugt mittels ihrer Gast-Teilnehmergruppen-Identifikationsnummer. Ein einfacher und eindeutiger Verbindungsaufbau ist so gewährleistet.

Jede Teilnehmergruppe kann vorteilhafterweise über mehrere Sub-Teilnehmergruppen verfügen. Jede Sub-Teilnehmergruppe kann vorteilhafterweise über mehrere Gast-Teilnehmergruppen verfügen. Jeder, einer Teilnehmergruppe zugeordnete Teilnehmer kann bevorzugt höchstens einer, der Teilnehmergruppe zugeordneten Sub-Teilnehmergruppe zugeordnet sein. Jeder Teilnehmer verfügt vorteilhafterweise über individuelle Berechtigungen zu verschiedenen Kommunikationsaufgaben mit bestimmten Teilnehmern und/oder Gast-Teilnehmergruppen aus bestimmten Sub-Teilnehmergruppen. Die Zuordnung von Teilnehmern zu Sub-Teilnehmergruppen erfolgt vorteilhafterweise durch die der jeweiligen Teilnehmergruppe zugeordnete Leitstelle. So ist eine weitere Unterteilung der Teilnehmergruppen möglich. Eine genauere Zuordnung der Teilnehmer ist damit erzielbar.

Jeder Sub-Teilnehmergruppe ist bevorzugt genau eine Sub-Teilnehmergruppen-Identifikationsnummer zugeordnet. Jedem Teilnehmer, welcher einer Sub-Teilnehmergruppe zugeordnet ist, ist bevorzugt die Sub-Teilnehmergruppen-Identifikationsnummer der jeweiligen Sub-Teilnehmergruppe zugewiesen. Jedem Teilnehmer, welcher über eine Berechtigung zu einer bestimmten Kommunikationsaufgabe mit einer bestimmten Gast-Teilnehmergruppe aus einer bestimmten Sub-Teilnehmergruppe verfügt, ist bevorzugt die jeweilige Gast-Teilnehmergruppen-Identifikationsnummer zugewiesen. So ist auch die Zuordnung der Teilnehmer zu Sub-Teilnehmergruppen eindeutig.

Jede Sub-Teilnehmergruppe entspricht bevorzugt einer Flotte. Genau eine Teilnehmergruppe entspricht bevorzugt keiner Organisation. Jede weitere Teilnehmergruppe entspricht bevorzugt einer Organisation. So kann innerhalb von Organisationen und zwischen Organisationen zielgerichtet und effizient kommuniziert werden.

Die Berechtigungen beinhalten vorteilhafterweise das Initiieren von Sprachverbindungen und/oder das Annehmen von Sprachverbindungen zu einem Teilnehmer und/oder das Annehmen von Sprachverbindungen zu einer Gruppe von Teilnehmern und/oder das Senden von Daten und/oder das Empfangen von Daten von einem Teilnehmer und/oder das Empfangen von Daten von einer Gruppe von Teilnehmern und/oder das Zuweisen von Gast-Teilnehmergruppen. So können jedem Teilnehmer gegenüber jedem anderen Teilnehmer bzw. Gruppe von Teilnehmern spezifische Rechte zur Kommunikation erteilt werden. Eine effiziente Kommunikation ist so gewährleistet.

Das Kommunikationsnetzwerk ist bevorzugt ein Funkkommunikationsnetzwerk, insbesondere ein Tetra-Funkkommunikationsnetzwerk. So können auch mobile Teilnehmer an der Kommunikation teilnehmen. Ein Zugriff auf Standardkomponenten senkt zusätzlich die Kosten.

Vorteilhafterweise verfügt jeder erstmalig einer Teilnehmergruppe zugeordnete Teilnehmer über bestimmte, der Teilnehmergruppe zugeordnete Berechtigungen zu verschiedenen Kommunikationsaufgaben mit bestimmten Teilnehmern und/oder Gast-Teilnehmergruppen aus bestimmten Teilnehmergruppen. So ist eine Zuweisung von Standard-Berechtigungen nicht eigens für jeden neuen Teilnehmer notwendig.

Die Kommunikation und/oder die Bestimmung der Berechtigungen und/oder die Zuweisung von Teilnehmern erfolgt bevorzugt verschlüsselt. So ist eine sichere, gegen Abhören geschützte Kommunikation gewährleistet.

Jede Teilnehmergruppe ist bevorzugt ein virtuelles privates Kommunikationsnetzwerk. So kann jede Teilnehmergruppe unabhängig von anderen Teilnehmergruppen kommunizieren. Eine gegenseitige Störung ist ausgeschlossen.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein beispielhaftes Kommunikationssystem;
- Fig. 2: mehrere Teilnehmergruppen eines erfindungsgemäßen Kommunikationssystems;
- Fig. 3: mehrere beispielhafte Kommunikationsverbindungen in einem ersten erfindungsgemäßen Kommunikationssystem;
- Fig. 4: mehrere beispielhafte Kommunikationsverbindungen in einem zweiten erfindungsgemäßen Kommunikationssystem, und
- Fig. 5: mehrere beispielhafte Kommunikationsverbindungen in einem dritten erfindungsgemäßen Kommunikationssystem.

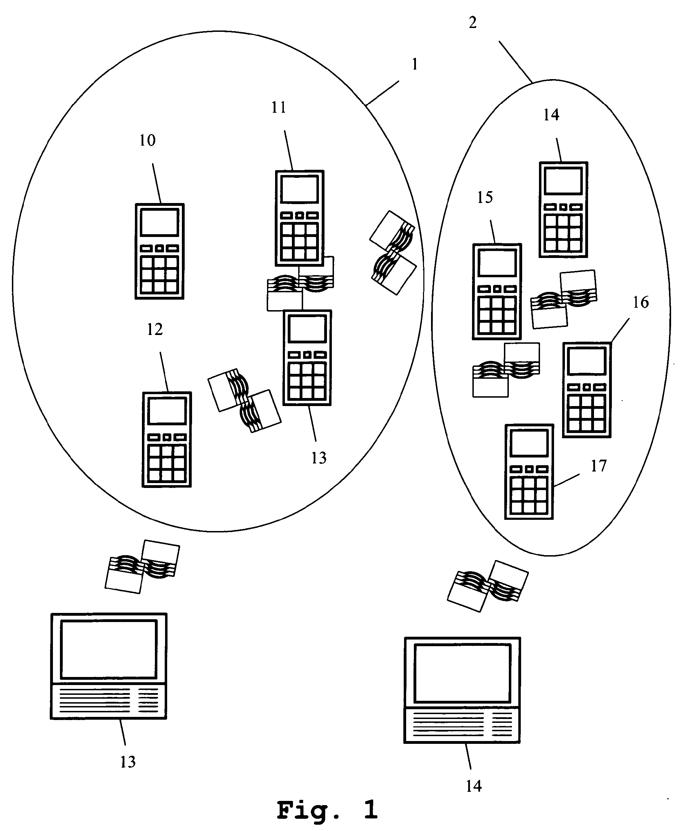

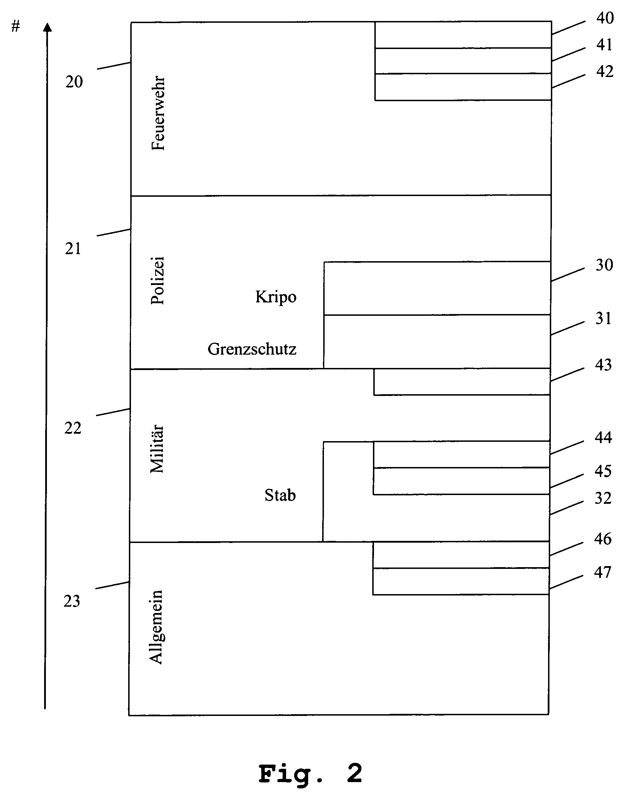

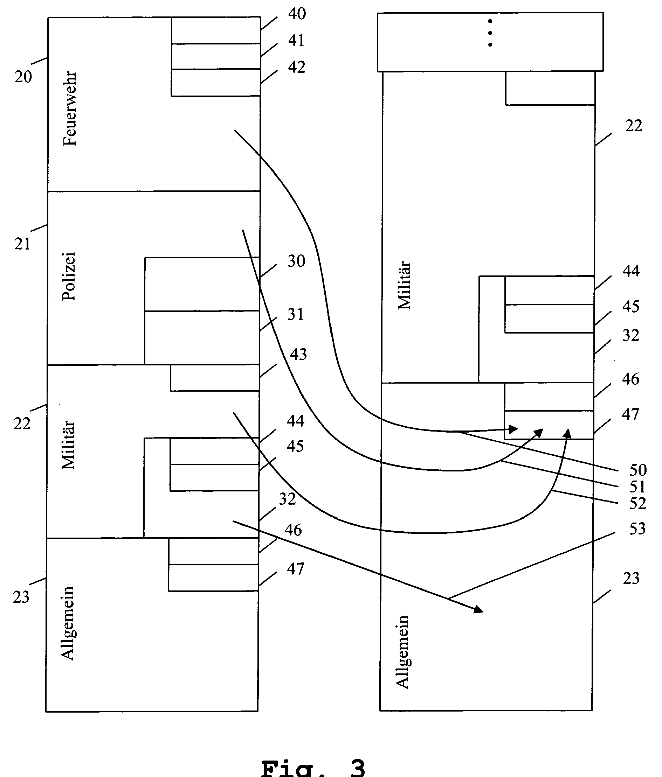

Zunächst wird anhand der Fig. 1 der Aufbau und die Funktionsweise eines beispielhaften Kommunikationssystems erläutert. Mittels Fig. 2 wird anschließend der hierarchische Aufbau in Teilnehmergruppen des Kommunikationssystems gezeigt. Mit Hilfe von Fig. 3 - 5 wird im Anschluss anhand von verschiedenen beispielhaften Kommunikationsverbindungen die Funktionsweise des erfindungsgemäßen Kommunikationssystems und Verfahrens zur Kommunikation verdeutlicht. Identische Elemente wurden in ähnlichen Abbildungen zum Teil nicht wiederholt dargestellt und beschrieben.

In Fig. 1 wird ein beispielhaftes Kommunikationssystem dargestellt. Die Teilnehmer 10, 11, 12, 13 sind der Teilnehmergruppe 1 zugeordnet. Die Teilnehmer 14, 15, 16, 17 sind der Teilnehmergruppe 2 zugeordnet. Die Teilnehmergruppe 1 entspricht dabei in diesem Beispiel der Feuerwehr, während die Teilnehmergruppe 2 der Polizei entspricht.

Die Leitstelle 13 ist der Teilnehmergruppe 1 zugeordnet, während die Leitstelle 14 der Teilnehmergruppe 2 zugeordnet ist. Dabei weist die Leitstelle 13 den Teilnehmern 10, 11, 12, 13 Berechtigungen zur Kommunikation zu, während die Leitstelle 14 den Teilnehmern 14, 15, 16, 17 Berechtigungen zur Kommunikation zuweist. Diese Zuweisung erfolgt in diesem Ausführungsbeispiel über eine Funkkommunikation. So sind die Teilnehmer 10, 11, 12, 13, 14, 15, 16, 17 üblicherweise mit umfangreichen Berechtigungen zur Kommunikation innerhalb ihrer Teilnehmergruppe 1, 2 ausgestattet. Jeder Polizist hat so das Recht, jeden anderen Polizisten zu kontaktieren. Hier können z.B. Teilnehmer 12 und Teilnehmer 13 oder Teilnehmer 13 und Teilnehmer 11 uneingeschränkt miteinander kommunizieren.

Ebenso hat auch jeder Teilnehmer der Teilnehmergruppe 2 (Feuerwehr) das Recht, jedes andere Mitglied dieser Gruppe zu kontaktieren. Hier können z.B. Teilnehmer 15 und Teilnehmer 17 oder Teilnehmer 14 und Teilnehmer 16 uneingeschränkt miteinander kommunizieren. Ausnahmen hiervon könnten z.B. besonders hochrangige Mitglieder der jeweiligen Organisation sein, die nicht von jedem Teilnehmer kontaktiert werden sollen. Eine Kommunikation zwischen Teilnehmern unterschiedlicher Teilnehmergruppen (Organisationen) ist üblicherweise bislang nicht möglich. So verfügen Mitglieder der Feuerwehr nicht über die Möglichkeit die Polizei zu kontaktieren. Ein Ausweichen auf alternative Medien (Telefon, Kontakt der Leitstellen untereinander) ist so notwendig.

In dem erfindungsgemäßen Kommunikationssystem ist ein solcher Kontakt jedoch möglich. So kann die der jeweiligen Teilnehmergruppe 1, 2 zugeordnete Leitstelle 13, 14 die Berechtigungen der Teilnehmer 10 - 17 entsprechend anpassen. So ist z.B. eine Berechtigung von Einsatzleitern der Feuerwehr und der Polizei zur gegenseitigen Kontaktierung denkbar. Auch ist eine zeitweilige Bildung von gemeinsamen Gruppen mit Teilnehmern aus mehreren Teilnehmergruppen möglich. Die Zuweisung von Berechtigungen wird anhand der Fig. 3 - 5 näher erläutert.

Fig. 2 zeigt mehrere Teilnehmergruppen eines erfindungsgemäßen Kommunikationssystems. Mehrere Teilnehmergruppen 20, 21, 22 sind jeweils unterschiedlichen Organisationen zugeordnet. So entspricht die Teilnehmergruppe 20 der Feuerwehr, die Teilnehmergruppe 21 der Polizei und die Teilnehmergruppe 22 dem Militär. Eine weitere Teilnehmergruppe ist 23 keiner Organisation zugeordnet. Jeder Teilnehmer (hier nicht dargestellt) ist einer dieser Teilnehmergruppen 20, 21, 22, 23 zugeordnet. Nicht einer der Organisationen angehörige Teilnehmer sind der Teilnehmergruppe 23 (Allgemein) zugeordnet.

Jedem Teilnehmer ist eine Teilnehmer-Identifikationsnummer zugeordnet. Jeder Teilnehmergruppe 20, 21, 22, 23 ist ein bestimmter Nummern-Bereich von Teilnehmer-Identifikationsnummern zugeordnet. D.h. jedem Teilnehmer ist eine Teilnehmer-Identifikationsnummer zugeordnet, welche aus dem Nummern-Bereich der ihm zugeordneten Teilnehmergruppe stammt. Weiterhin verfügt jede Teilnehmergruppe 20, 21, 22, 23 über genau eine Teilnehmergruppen-Identifikationsnummer. Jedem, einer Teilnehmergruppe 20, 21, 22, 23 zugeordneten Teilnehmer ist auch diese Teilnehmergruppen-Identifikationsnummer zugeordnet.

Weiterhin verfügen einzelne Teilnehmergruppen 21, 22 über Sub-Teilnehmergruppen 30, 31, 32. Sub-Teilnehmergruppen 30, 31, 32 dienen der weiteren Segmentierung der Teilnehmer innerhalb ihrer Teilnehmergruppe 21, 22. Jede Sub-Teilnehmergruppe 30, 31, 32 verfügt wiederum über eine eindeutige Sub-Teilnehmergruppen-Identifikationsnummer und einen Bereich von Teilnehmer-Identifikationsnummern. Jedem einer bestimmten Sub-Teilnehmergruppe 30, 31, 32 zugeordnete Teilnehmer ist ebenfalls diese Sub-Teilnehmergruppen-Identifikationsnummer zugeordnet. Jeder einer Sub-Teilnehmergruppe 30, 31, 32 zugeordnete Teilnehmer verfügt über eine Teilnehmer-Identifikationsnummer aus dem Nummern-Bereich der Sub-Teilnehmergruppe 30, 31, 32.

Beispielsweise verfügt die Teilnehmergruppe 21 (Polizei) über die Sub-Teilnehmergruppen 30, 31 (Kriminalpolizei, Grenzschutz). Die Teilnehmer der Teilnehmergruppe 21 (Polizei) sind nun entweder der allgemeinen Teilnehmergruppe 21 (Polizei) oder einer der Sub-Teilnehmergruppen 30, 31 zugeordnet. Auch die Teilnehmergruppe 22 (Militär) verfügt in diesem Ausführungsbeispiel über eine Sub-Teilnehmergruppe 32 (Stab). Auch hier sind sämtliche zugeordneten Teilnehmer entweder der allgemeinen Teilnehmergruppe 22 (Militär) oder der Sub-Teilnehmergruppe 32 (Stab) zugeordnet. Die Teilnehmergruppe 23 (Allgemein) verfügt über keine Sub-Teilnehmergruppen.

Darüber hinaus sind in einzelnen Teilnehmergruppen 20, 22, 23 Gast-Teilnehmergruppen 40, 41, 42, 43, 46, 47 vorgesehen. Auf die Funktion von Gast-Teilnehmergruppen wird im weiteren Verlauf näher eingegangen. Auch einer Sub-Teilnehmergruppe 32 können Gast-Teilnehmergruppen 44, 45 zugeordnet sein. Dabei verfügt jede Gast-Teilnehmergruppe 40, 41, 42, 43, 44, 45, 46, 47 über eine Gast-Teilnehmergruppen-Identifikationsnummer. Diese Nummer identifiziert die Gast-Teilnehmergruppe 40, 41, 42, 43, 44, 45, 46, 47 eindeutig.

Einer Gast-Teilnehmergruppe 40, 41, 42, 43, 44, 45, 46, 47 ist jedoch kein Bereich von Teilnehmer-Identifikationsnummern zugeordnet. Jeder Teilnehmer, welcher einer Gast-Teilnehmergruppe 40, 41, 42, 43, 44, 45, 46, 47 zugeordnet ist, verfügt weiterhin über seine ursprüngliche Teilnehmer-Identifikationsnummer. Zusätzlich wird ihm die Gast-Teilnehmer-Identifikationsnummer der Gast-Teilnehmergruppe 40, 41, 42, 43, 44, 45, 46, 47 zugeordnet.

Wie bereits anhand der Fig. 1 angedeutet, erfolgt die Zuordnung der Teilnehmer zu Teilnehmergruppen 20, 21, 22, 23 bzw. Sub-Teilnehmergruppen 30, 31, 32 bzw. Gast-Teilnehmergruppen 40, 41, 42, 43, 44, 45, 46, 47 durch eine der jeweiligen Teilnehmergruppe 20, 21, 22, 23 zugeordnete Leitstelle. Ebenso wäre eine Zuordnung durch einzelne Teilnehmer, welche über die Berechtigungen einer Leitstelle verfügen, möglich. Auch die Erstellung von Sub-Teilnehmergruppen 30, 31, 32 und Gast-Teilnehmergruppen 40, 41, 42, 43, 44, 45, 46, 47 erfolgt auf dieselbe Weise. Die Teilnehmergruppen 20, 21, 22, 23 werden nicht von den, den Teilnehmergruppen 20, 21, 22, 23 zugeordneten Leitstellen geschaffen, sondern von einer übergeordneten Stelle. Üblicherweise werden die Teilnehmergruppen 20, 21, 22, 23 bereits bei Erstellung des Kommunikationssystems angelegt. Darüber hinaus ist auch eine Erstellung von Sub-Teilnehmergruppen 30, 31, 32 bzw. Gast-Teilnehmergruppen 40, 41, 42, 43, 44, 45, 46, 47 bereits bei Erstellung des Kommunikationssystems ohne Einbindung der Leitstellen möglich.

Ziel der Gast-Teilnehmergruppen 40, 41, 42, 43, 44, 45, 46, 47 ist es, eine geregelte Kommunikation zwischen Teilnehmern unterschiedlicher Teilnehmergruppen 20, 21, 22, hier also Teilnehmern unterschiedlicher Organisationen, zu ermöglichen. Dies wird anhand der Fig. 3 - 5 näher erläutert.

In Fig. 3 werden mehrere beispielhafte Kommunikationsverbindungen in einem ersten erfindungsgemäßen Kommunikationssystem dargestellt. Nebeneinander sind zwei Darstellungen der Teilnehmergruppen 20, 21, 22 und 23 desselben Kommunikationssystems abgebildet. Auf der linken Seite sind sämtliche Teilnehmergruppen 20, 21, 22 und 23 dargestellt. Auf der rechten Seite sind die Teilnehmergruppen 22 und 23 vergrößert dargestellt. Jeder Teilnehmer verfügt über die Berechtigung beliebige Kommunikationsverbindungen mit Teilnehmern der Teilnehmergruppe 23 (Allgemein) aufzubauen. So ist ein Teilnehmer aus der Sub-Teilnehmergruppe 32 berechtigt eine Sprachverbindung 53 mit einem individuellen Teilnehmer aus der Teilnehmergruppe 23 (Allgemein) aufzubauen. Teilnehmer der Teilnehmergruppe 23 (Allgemein) verfügen ebenfalls über diese Berechtigung. Eine Kontaktierung eines nicht der Teilnehmergruppe 23 (Allgemein) angehörigen Teilnehmers durch einen, der Teilnehmergruppe 23 (Allgemein) zugeordneten Teilnehmer ist in diesem Ausführungsbeispiel jedoch nicht möglich.

Weiterhin verfügt jeder Teilnehmer über die Berechtigung sich einer Gast-Teilnehmergruppe 46, 47 der Teilnehmergruppe 23 anzuschließen. So werden Kommunikationsverbindungen 50, 51, 52 eines Teilnehmers aus der Teilnehmergruppe 20 (Feuerwehr), eines Teilnehmers aus der Teilnehmergruppe 21 (Polizei) und eines Teilnehmers aus der Teilnehmergruppe 22 (Militär) zu der Gast-Teilnehmergruppe 47 aus der Teilnehmergruppe 23 (Allgemein) dargestellt. Sind die Teilnehmer der Gast-Teilnehmergruppe 47 zugeordnet, können sie beliebige Kommunikationsverbindungen zu der Gast-Teilnehmergruppe 47 aufbauen. Sämtliche der Gast-Teilnehmergruppe 47 zugeordneten Teilnehmer empfangen diese Kommunikationsverbindungen. Die Zuordnung zu der Gast-Teilnehmergruppe 47 erfolgt dabei entweder durch eine der jeweiligen Teilnehmergruppe 20, 21, 22 des Teilnehmers zugeordnete Leitstelle oder durch den Teilnehmer selbst, falls er über die benötigte Berechtigung verfügt. Eine direkte Kontaktierung eines Teilnehmers einer fremden Teilnehmergruppe ist so jedoch nicht möglich.

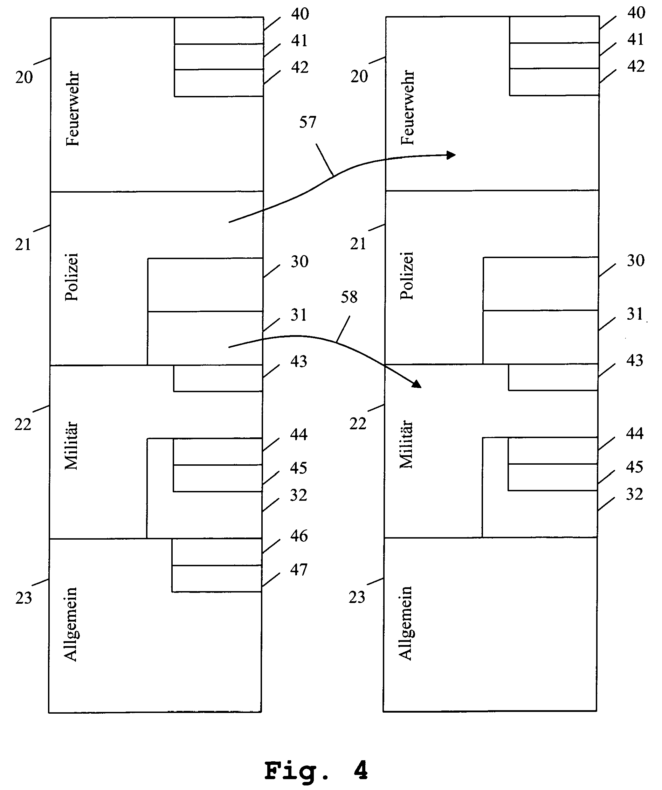

Fig. 4 zeigt mehrere beispielhafte Kommunikationsverbindungen in einem zweiten erfindungsgemäßen Kommunikationssystem. Bestimmten individuellen Teilnehmern sind von ihren jeweiligen Leitstellen die Berechtigungen zu bestimmten Kommunikationsaufgaben gegenüber bestimmten individuellen Teilnehmern anderer Teilnehmergruppen bzw. anderer Sub-Teilnehmergruppen zugewiesen. So ist in diesem Ausführungsbeispiel eine Verbindung 57 zwischen einem Teilnehmer der Teilnehmergruppe 21 (Polizei) und einem Teilnehmer der Teilnehmergruppe 20 (Feuerwehr) dargestellt. Für diese Verbindung 57 ist es notwendig, dass der Teilnehmer aus der Teilnehmergruppe 21 (Polizei) über eine Berechtigung zur Initiierung von Kommunikationsverbindungen zu entweder allen oder zumindest diesem spezifischen Teilnehmer der Teilnehmergruppe 20 (Feuerwehr) verfügt. Darüber hinaus benötigt der Teilnehmer aus der Teilnehmergruppe 21 (Feuerwehr) die Berechtigung Kommunikationsverbindungen von individuellen Teilnehmern, zumindest von diesem einen Teilnehmer der Teilnehmergruppe 21 (Polizei) anzunehmen.

Diese Berechtigungen werden von den jeweiligen Leitstellen der Teilnehmergruppen zugewiesen. Weiterhin ist eine Verbindung 58 zwischen einem Teilnehmer der Sub-Teilnehmergruppe 31 der Teilnehmergruppe 21 (Polizei) mit einem Teilnehmer der Teilnehmergruppe 22 (Militär) dargestellt. Auch hier werden die notwendigen Berechtigungen von den Leitstellen zugewiesen. Verfügt die Sub-Teilnehmergruppe 31 über eine eigene Leitstelle, so weist diese die Berechtigungen zu. Verfügt sie über keine eigene Leitstelle, so weist die für die Teilnehmergruppe 21 (Polizei) zuständige Leitstelle zu. Eine Zuordnung mehrerer gleichberechtigter oder hierarchisch gegliederter Leitstellen zu einer Teilnehmergruppe oder einer Sub-Teilnehmergruppe ist weiterhin möglich.

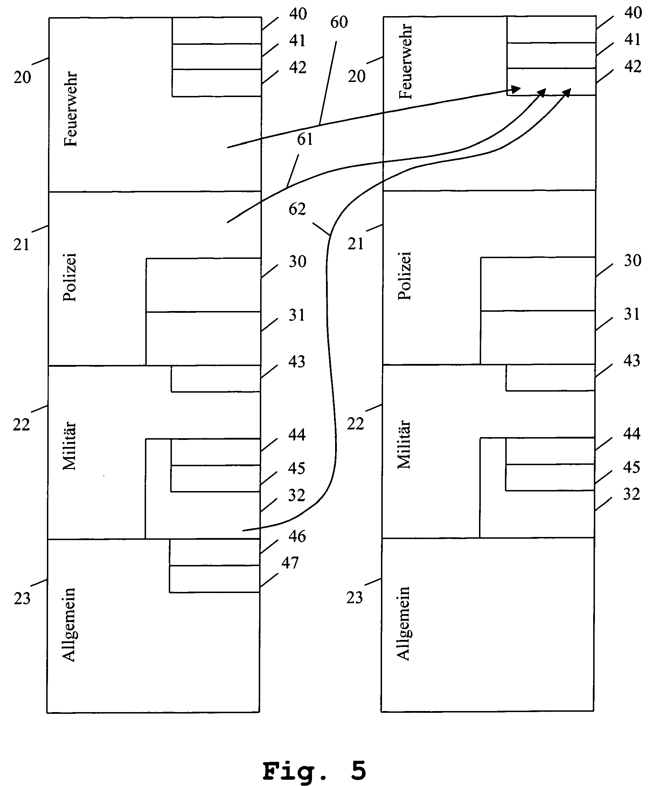

In Fig. 5 werden mehrere beispielhafte Kommunikationsverbindungen in einem dritten erfindungsgemäßen Kommunikationssystem dargestellt. Um gezielt in Gruppen kommunizieren zu können, verfügen die Teilnehmergruppen 20, 21, 22 über Gast-Teilnehmergruppen 40, 41, 42, 43. Sub-Teilnehmergruppen verfügen ebenfalls über Gast-Teilnehmergruppen 44, 45. So wird einem Teilnehmer, welcher an einer Gruppenkommunikation mittels einer Gast-Teilnehmergruppe 40, 41, 42, 43, 44, 45 teilnehmen soll, von der seiner eigenen Teilnehmergruppe 20, 21, 22 zugeordneten Leitstelle die Berechtigung zur Kommunikation (Initiieren von Verbindungen, Entgegennehmen von Verbindungen) mit der Gast-Teilnehmergruppe 40, 41, 42, 43, 44, 45 zugewiesen. Mit jedem an der Gruppenkommunikation teilnehmenden Teilnehmer wird so verfahren.

Die Teilnehmer können dabei unterschiedlichen Teilnehmergruppen 20, 21, 22 bzw. unterschiedlichen Sub-Teilnehmergruppen 30, 31, 32 angehören. So wird in diesem Ausführungsbeispiel eine Gruppenkommunikation mittels der Gast-Teilnehmergruppe 42 aus der Teilnehmergruppe 20 (Feuerwehr) gezeigt. Teilnehmern aus den Teilnehmergruppen 20 (Feuerwehr) und 21 (Polizei) und der Sub-Teilnehmergruppe 32 aus der Teilnehmergruppe 22 (Militär) ist die Gast-Teilnehmergruppe 42 zugewiesen. Sie verfügen über die Berechtigungen, Verbindungen zu der Gast-Teilnehmergruppe zu initiieren und Verbindungen von ihr entgegenzunehmen. Die Berechtigungen wurden den Teilnehmern von ihren jeweiligen Leitstellen zugewiesen. Verfügt die Sub-Teilnehmergruppe 32 über keine eigene Leitstelle, so ist eine der Teilnehmergruppe 22 (Militär) zugeordnete Leiststelle zuständig.

Wird von einem der mit der Gast-Teilnehmergruppe 42 verbundenen Teilnehmer z.B. eine Sprachverbindung zu der Gast-Teilnehmergruppe 42 initiiert, so empfangen alle der Gast-Teilnehmergruppe 42 zugeordneten Teilnehmer die Sprachverbindung.

Die Erfindung ist nicht auf das dargestellte Ausführungsbeispiel beschränkt. Wie bereits erwähnt, können unterschiedliche Kommunikationsnetzwerke eingesetzt werden. Auch eine Kombination verschiedener Kommunikationsnetzwerke in einem gemeinsamen Kommunikationsnetzwerk ist denkbar. Auch eine abweichende hierarchische Struktur von Teilnehmergruppen bzw. Sub-Teilnehmergruppen ist denkbar. Alle vorstehend beschriebenen Merkmale oder in den Figuren gezeigten Merkmale sind im Rahmen der Erfindung vorteilhaft beliebig miteinander kombinierbar.

## Patentansprüche

1. Kommunikationssystem mit einem Kommunikationsnetzwerk, mehreren Teilnehmern (10, 11, 12, 13, 14, 15, 16, 17), mehreren Teilnehmergruppen (1, 2, 20, 21, 22, 23) und jeder Teilnehmergruppe (1, 2, 20, 21, 22, 23) zugeordnet jeweilig zumindest eine Leitstelle (13, 14), wobei jeder Teilnehmer (10, 11, 12, 13, 14, 15, 16, 17) genau einer Teilnehmergruppe (1, 2, 20, 21, 22, 23) zugeordnet ist,
wobei das Kommunikationssystem derart ausgebildet ist, dass jede Teilnehmergruppe (1, 2, 20, 21, 22, 23) mehreren Gast-Teilnehmergruppen (40, 41, 42, 43, 44, 45, 46, 47) zugeordnet werden kann,
wobei das Kommunikationssystem derart ausgebildet ist,
dass jeder Teilnehmer (10, 11, 12, 13, 14, 15, 16, 17) über individuelle Berechtigungen zu verschiedenen Kommunikationsaufgaben mit bestimmten Teilnehmern (10, 11, 12, 13, 14, 15, 16, 17) und/oder Gast-Teilnehmergruppen (40, 41, 42, 43, 44, 45, 46, 47) aus bestimmten Teilnehmergruppen (1, 2, 20, 21, 22, 23) verfügt,
**dadurch gekennzeichnet,**
**dass** das Kommunikationssystem derart ausgebildet ist, dass die Bestimmung der Berechtigungen und die Zuweisung von Teilnehmern (10, 11, 12, 13, 14, 15, 16, 17) zu Teilnehmergruppen (1, 2, 20, 21, 22, 23) und/oder Gast-Teilnehmergruppen (40, 41, 42, 43, 44, 45, 46, 47) ausschließlich durch die der Teilnehmergruppe (1, 2, 20, 21, 22, 23) eines an einer Kommunikation teilnehmenden Teilnehmers (10, 11, 12, 13, 14, 15, 16, 17) jeweilige zugeordnete Leitstelle (13, 14) erfolgt, und dass das Kommunikationsnetzwerk ein Tetra-Funkkommunikationsnetzwerk ist.

2. Kommunikationssystem nach Anspruch 1,
wobei das Kommunikationssystem derart ausgebildet ist, dass jede Sub-Teilnehmergruppe (30, 31, 32) über mehrere Gast-Teilnehmergruppen (40, 41, 42, 43, 44, 45, 46, 47) verfügen kann, und
wobei
das Kommunikationssystem derart ausgebildet ist, dass jeder einer Teilnehmergruppe (1, 2, 20, 21, 22, 23) zugeordnete Teilnehmer (10, 11, 12, 13, 14, 15, 16, 17) höchstens einer der Teilnehmergruppe (1, 2, 20, 21, 22, 23) zugeordneten Sub-Teilnehmergruppe (30, 31, 32) zugeordnet sein kann.

3. Kommunikationssystem nach Anspruch 1 oder 2,
wobei
das Kommunikationssystem derart ausgebildet ist, dass jedem Teilnehmer (10, 11, 12, 13, 14, 15, 16, 17) zumindest eine Teilnehmer-Identifikationsnummer zugeordnet ist,
wobei
das Kommunikationssystem derart ausgebildet ist, dass jeder Teilnehmergruppe (1, 2, 20, 21, 22, 23) genau eine Teilnehmergruppen-Identifikationsnummer zugeordnet ist, und
wobei
das Kommunikationssystem derart ausgebildet ist, dass jeder Gast-Teilnehmergruppe (40, 41, 42, 43, 44, 45, 46, 47) genau eine Gast-Teilnehmergruppen-Identifikationsnummer zugeordnet ist.

4. Kommunikationssystem nach Anspruch 3,
wobei
das Kommunikationssystem derart ausgebildet ist, dass jedem Teilnehmer (10, 11, 12, 13, 14, 15, 16, 17) die Teilnehmergruppen-Identifikationsnummer der ihm zugewiesenen Teilnehmergruppe (1, 2, 20, 21, 22, 23) zugewiesen ist, und/oder
dass das Kommunikationssystem derart ausgebildet ist, dass jedem Teilnehmer (10, 11, 12, 13, 14, 15, 16, 17), welcher über eine Berechtigung zu einer bestimmten Kommunikationsaufgabe mit einer bestimmten Gast-Teilnehmergruppe (40, 41, 42, 43, 44, 45, 46, 47) aus einer bestimmten Teilnehmergruppe (1, 2, 20, 21, 22, 23) verfügt, die jeweilige Gast-Teilnehmergruppen-Identifikationsnummer zugewiesen ist.

5. Kommunikationssystem nach Anspruch 3 oder 4,
wobei
das Kommunikationssystem derart ausgebildet ist, dass eine Kommunikation mit einem Teilnehmer (10, 11, 12, 13, 14, 15, 16, 17) mittels der ihm zugewiesenen Teilnehmer-Identifikationsnummer erfolgt, und/oder
dass das Kommunikationssystem derart ausgebildet ist, dass eine Kommunikation mit einer Gast-Teilnehmergruppe (40, 41, 42, 43, 44, 45, 46, 47) mittels ihrer Gast-Teilnehmergruppen-Identifikationsnummer erfolgt.

6. Kommunikationssystem nach einem der Ansprüche 1 bis 5,
wobei die zumindest eine Leitstelle (13, 14) derart ausgebildet ist, dass die Zuordnung von Teilnehmern (10, 11, 12, 13, 14, 15, 16, 17) zu Sub-Teilnehmergruppen (30, 31, 32) durch die der jeweiligen Teilnehmergruppe (1, 2, 20, 21, 22, 23) zugeordnete Leitstelle (13, 14) erfolgt.

7. Kommunikationssystem nach Anspruch 6,
wobei
das Kommunikationssystem derart ausgebildet ist, dass jeder Sub-Teilnehmergruppe (30, 31, 32) genau eine Sub-Teilnehmergruppen-Identifikationsnummer zugeordnet ist, dass jedem Teilnehmer (10, 11, 12, 13, 14, 15, 16, 17), welcher einer Sub-Teilnehmergruppe (30, 31, 32) zugeordnet ist, die Sub-Teilnehmergruppen-Identifikationsnummer der jeweiligen Sub-Teilnehmergruppe (30, 31, 32) zugewiesen ist,
wobei
das Kommunikationssystem derart ausgebildet ist, dass jedem Teilnehmer (10, 11, 12, 13, 14, 15, 16, 17), welcher über eine Berechtigung zu einer bestimmten Kommunikationsaufgabe mit einer bestimmten Gast-Teilnehmergruppe (40, 41, 42, 43, 44, 45, 46, 47) aus einer bestimmten Sub-Teilnehmergruppe (30, 31, 32) verfügt, die jeweilige Gast-Teilnehmergruppen-Identifikationsnummer zugewiesen ist.

8. Kommunikationssystem nach Anspruch 6 oder 7,
wobei
das Kommunikationssystem derart ausgebildet ist, dass jede Sub-Teilnehmergruppe (30, 31, 32) einer bestimmten Flotte entspricht.

9. Kommunikationssystem nach einem der Ansprüche 1 bis 8,
wobei das Kommunikationssystem derart ausgebildet ist, dass die Berechtigungen das Initiieren von Sprachverbindungen und/oder das Annehmen von Sprachverbindungen zu einem Teilnehmer (10, 11, 12, 13, 14, 15, 16, 17) und/oder das Annehmen von Sprachverbindungen zu einer Gruppe von Teilnehmern (10, 11, 12, 13, 14, 15, 16, 17) und/oder das Senden von Daten und/oder das Empfangen von Daten von einem Teilnehmer (10, 11, 12, 13, 14, 15, 16, 17) und/oder das Empfangen von Daten von einer Gruppe von Teilnehmern (10, 11, 12, 13, 14, 15, 16, 17) und/oder das Zuweisen von Gast-Teilnehmergruppen (40, 41, 42, 43, 44, 45, 46, 47) beinhalten.

10. Kommunikationssystem nach einem der Ansprüche 1 bis 9,
wobei
das Kommunikationssystem derart ausgebildet ist, dass jeder erstmalig einer Teilnehmergruppe (1, 2, 20, 21, 22, 23) zugeordnete Teilnehmer (10, 11, 12, 13, 14, 15, 16, 17) über bestimmte der Teilnehmergruppe (1, 2, 20, 21, 22, 23) zugeordnete Berechtigungen zu verschiedenen Kommunikationsaufgaben mit bestimmten Teilnehmern (10, 11, 12, 13, 14, 15, 16, 17) und/oder Gast-Teilnehmergruppen (40, 41, 42, 43, 44, 45, 46, 47) aus bestimmten Teilnehmergruppen (1, 2, 20, 21, 22, 23) verfügt.

11. Kommunikationssystem nach einem der Ansprüche 1 bis 10,
wobei
das Kommunikationssystem derart ausgebildet ist, dass die Kommunikation und/oder die Bestimmung der Berechtigungen und/oder die Zuweisung von Teilnehmern (10, 11, 12, 13, 14, 15, 16, 17) verschlüsselt erfolgt.

12. Kommunikationssystem nach einem der Ansprüche 1 bis 11,
wobei
das Kommunikationssystem derart ausgebildet ist, dass jede Teilnehmergruppe (1, 2, 20, 21, 22, 23) ein virtuelles privates Kommunikationsnetzwerk ist.

13. Verfahren zur Kommunikation mittels eines Kommunikationsnetzwerks,
wobei das Kommunikationsnetzwerk über mehrere Teilnehmer (10, 11, 12, 13, 14, 15, 16, 17), mehrere Teilnehmergruppen (1, 2, 20, 21, 22, 23) und jeder Teilnehmergruppe (1, 2, 20, 21, 22, 23) zugeordnet jeweilig zumindest eine Leitstelle (13, 14) verfügt,
wobei jeder Teilnehmer (10, 11, 12, 13, 14, 15, 16, 17) genau einer Teilnehmergruppe (1, 2, 20, 21, 22, 23) zugeordnet wird,
wobei jede Teilnehmergruppe (1, 2, 20, 21, 22, 23) mehreren Gast-Teilnehmergruppen (40, 41, 42, 43, 44, 45, 46, 47) zugeordnet werden kann,
wobei jeder Teilnehmer (10, 11, 12, 13, 14, 15, 16, 17) über individuelle Berechtigungen zu verschiedenen Kommunikationsaufgaben mit bestimmten Teilnehmern (10, 11, 12, 13, 14, 15, 16, 17) und/oder Gast-Teilnehmergruppen (40, 41, 42, 43, 44, 45, 46, 47) aus bestimmten Teilnehmergruppen (1, 2, 20, 21, 22, 23) verfügt,
**dadurch gekennzeichnet,**
**dass** die Bestimmung der Berechtigungen und die Zuweisung von Teilnehmern (10, 11, 12, 13, 14, 15, 16, 17) zu Teilnehmergruppen (1, 2, 20, 21, 22, 23) und/oder Gast-Teilnehmergruppen (40, 41, 42, 43, 44, 45, 46, 47) ausschließlich von der der Teilnehmergruppe (1, 2, 20, 21, 22, 23) eines an einer Kommunikation teilnehmenden Teilnehmers (10, 11, 12, 13, 14, 15, 16, 17) jeweiligen zugeordneten Leitstelle (13, 14) durchgeführt werden, und
**dass** das Kommunikationsnetzwerk ein Tetra-Funkkommunikationsnetzwerk ist.

14. Verfahren nach Anspruch 13,
wobei jede Teilnehmergruppe (1, 2, 20, 21, 22, 23) über mehrere Sub-Teilnehmergruppen (30, 31, 32) verfügen kann, dass jede Sub-Teilnehmergruppe (30, 31, 32) über mehrere Gast-Teilnehmergruppen (40, 41, 42, 43, 44, 45, 46, 47) verfügen kann, und
wobei jeder, einer Teilnehmergruppe zugeordnete Teilnehmer (10, 11, 12, 13, 14, 15, 16, 17) höchstens einer der Teilnehmergruppe (1, 2, 20, 21, 22, 23) zugeordneten Sub-Teilnehmergruppe (30, 31, 32) zugeordnet werden kann.

15. Verfahren nach Anspruch 13 oder 14,
wobei jedem Teilnehmer (10, 11, 12, 13, 14, 15, 16, 17) zumindest eine Teilnehmer-Identifikationsnummer zugeordnet wird,
wobei jeder Teilnehmergruppe (1, 2, 20, 21, 22, 23) genau eine Teilnehmergruppen-Identifikationsnummer zugeordnet wird, und
wobei jeder Gast-Teilnehmergruppe (40, 41, 42, 43, 44, 45, 46, 47) genau eine Gast-Teilnehmergruppen-Identifikationsnummer zugeordnet wird.

16. Verfahren nach Anspruch 15,
wobei jedem Teilnehmer (10, 11, 12, 13, 14, 15, 16, 17) die Teilnehmergruppen-Identifikationsnummer der ihm zugewiesenen Teilnehmergruppe (1, 2, 20, 21, 22, 23) zugewiesen wird und/oder
wobei jedem Teilnehmer (10, 11, 12, 13, 14, 15, 16, 17), welcher über eine Berechtigung zu einer bestimmten Kommunikationsaufgabe mit einer bestimmten Gast-Teilnehmergruppe (40, 41, 42, 43, 44, 45, 46, 47) aus einer bestimmten Teilnehmergruppe (1, 2, 20, 21, 22, 23) verfügt, die jeweilige Gast-Teilnehmergruppen-Identifikationsnummer zugewiesen wird.

17. Verfahren nach Anspruch 15 oder 16,
wobei eine Kommunikation mit einem Teilnehmer (10, 11, 12, 13, 14, 15, 16, 17) mittels der ihm zugewiesenen Teilnehmer-Identifikationsnummer erfolgt und/oder
wobei eine Kommunikation mit einer Gast-Teilnehmergruppe (40, 41, 42, 43, 44, 45, 46, 47) mittels ihrer Gast-Teilnehmergruppen-Identifikationsnummer erfolgt.

18. Verfahren nach einem der Ansprüche 14 bis 17,
wobei die der jeweiligen Teilnehmergruppe (1, 2, 20, 21, 22, 23) zugeordnete Leitstelle (13, 14) die Zuordnung von Teilnehmern zu Sub-Teilnehmergruppen (30, 31, 32) durchführt.

19. Verfahren nach Anspruch 18,
wobei jeder Sub-Teilnehmergruppe (30, 31, 32) genau eine Sub-Teilnehmergruppen-Identifikationsnummer zugeordnet wird,
wobei jedem Teilnehmer (10, 11, 12, 13, 14, 15, 16, 17), welcher einer Sub-Teilnehmergruppe (30, 31, 32) zugeordnet ist, die Sub-Teilnehmergruppen-Identifikationsnummer der jeweiligen Sub-Teilnehmergruppe (30, 31, 32) zugewiesen wird,
wobei jedem Teilnehmer (10, 11, 12, 13, 14, 15, 16, 17), welcher über eine Berechtigung zu einer bestimmten Kommunikationsaufgabe mit einer bestimmten Gast-Teilnehmergruppe (40, 41, 42, 43, 44, 45, 46, 47) aus einer bestimmten Sub-Teilnehmergruppe (30, 31, 32) verfügt, die jeweilige Gast-Teilnehmergruppen-Identifikationsnummer zugewiesen wird.

20. Verfahren nach Anspruch 18 oder 19,
wobei jede Sub-Teilnehmergruppe (30, 31, 32) einer bestimmten Flotte entspricht.

21. Verfahren nach einem der Ansprüche 14 bis 20,
wobei die Berechtigungen das Initiieren von Sprachverbindungen und/oder das Annehmen von Sprachverbindungen zu einem Teilnehmer (10, 11, 12, 13, 14, 15, 16, 17) und/oder das Annehmen von Sprachverbindungen zu einer Gruppe von Teilnehmern (10, 11, 12, 13, 14, 15, 16, 17) und/oder das Senden von Daten und/oder das Empfangen von Daten von einem Teilnehmer (10, 11, 12, 13, 14, 15, 16, 17) und/oder das Empfangen von Daten von einer Gruppe von Teilnehmern (10, 11, 12, 13, 14, 15, 16, 17) und/oder das Zuweisen von Gast-Teilnehmergruppen (40, 41, 42, 43, 44, 45, 46, 47) beinhalten.

22. Verfahren nach einem der Ansprüche 14 bis 21,
wobei jedem erstmalig einer Teilnehmergruppe (1, 2, 20, 21, 22, 23) zugeordneten Teilnehmer (10, 11, 12, 13, 14, 15, 16, 17) bestimmte der Teilnehmergruppe (1, 2, 20, 21, 22, 23) zugeordnete Berechtigungen zu verschiedenen Kommunikationsaufgaben mit bestimmten Teilnehmern (10, 11, 12, 13, 14, 15, 16, 17) und/oder Gast-Teilnehmergruppen (40, 41, 42, 43, 44, 45, 46, 47) aus bestimmten Teilnehmergruppen (1, 2, 20, 21, 22, 23) von der Leitstelle (13, 14) übertragen werden.

23. Verfahren nach einem der Ansprüche 14 bis 22,
wobei die Kommunikation und/oder die Bestimmung der Berechtigungen und/oder die Zuweisung von Teilnehmern (10, 11, 12, 13, 14, 15, 16, 17) verschlüsselt erfolgt.

24. Verfahren nach einem der Ansprüche 14 bis 23,
wobei jede Teilnehmergruppe (1, 2, 20, 21, 22, 23) ein virtuelles privates Kommunikationsnetzwerk ist.

## Claims

1. Communications system with a communications network, a plurality of subscribers (10, 11, 12, 13, 14, 15, 16, 17), a plurality of subscriber groups (1, 2, 20, 21, 22, 23) and at least one control station (13, 14) assigned to each subscriber group (1, 2, 20, 21, 22, 23) in each case,
wherein each subscriber (10, 11, 12, 13, 14, 15, 16, 17) is assigned to just one subscriber group (1, 2, 20, 21, 22, 23),
wherein the communications system is embodied such that each subscriber group (1, 2, 20, 21, 22, 23) can be assigned to a plurality of guest subscriber groups (40, 41,42, 43,44, 45, 46, 47),
wherein the communications system is embodied such that each subscriber (10, 11, 12, 13, 14, 15, 16, 17) has individual entitlements to different communications tasks with certain subscribers (10, 11, 12, 13, 14, 15, 16, 17) and/or guest subscriber groups (40, 41, 42,43, 44, 45, 46, 47) from certain subscriber groups (1, 2, 20, 21, 22, 23),
**characterised in that**
the communications system is embodied such that the definition of the entitlements and the allocation of subscribers (10, 11, 12, 13, 14, 15, 16, 17) to subscriber groups (1, 2, 20, 21, 22, 23) and/or guest subscriber groups (40, 41, 42, 43, 44, 45, 46, 47) are effected exclusively by the particular control station (13, 14) assigned to the subscriber group (1, 2, 20, 21, 22, 23) of a subscriber (10, 11, 12, 13, 14, 15, 16, 17) taking part in a communication,
and **in that** the communications network is a Tetra radio communications network.

2. Communications system according to claim 1,
wherein the communications system is embodied such that each subscriber sub group (30, 31, 32) can have a plurality of guest subscriber groups (40, 41, 42, 43, 44, 45, 46, 47), and
wherein the communications system is embodied such that each subscriber (10, 11, 12, 13, 14, 15, 16, 17) assigned to a subscriber group (1, 2, 20, 21, 22, 23) can be assigned at most to one subscriber sub group (30, 31, 32) assigned to the subscriber group (1, 2, 20, 21, 22, 23).

3. Communications system according to claim 1 or 2,
wherein the communications system is embodied such that each subscriber (10, 11, 12, 13, 14, 15, 16, 17) is assigned at least one subscriber identification number,
wherein the communications system is embodied such that each subscriber group (1, 2, 20, 21, 22, 23) is assigned just one subscriber group identification number, and wherein the communications system is embodied such that each guest subscriber group (40, 41, 42, 43, 44, 45, 46, 47) is assigned just one guest subscriber group identification number.

4. Communications system according to claim 3,
wherein the communications system is embodied such that each subscriber (10, 11, 12, 13, 14, 15, 16, 17) is assigned the subscriber group identification number of the subscriber group (1, 2, 20, 21, 22, 23) to which it is assigned, and/or
wherein the communications system is embodied such that each subscriber (10, 11, 12, 13, 14, 15, 16, 17) which has an entitlement to a particular communications task with a particular guest subscriber group (40, 41, 42, 43, 44, 45, 46, 47) from a particular subscriber group (1, 2, 20, 21, 22, 23) is assigned the respective guest subscriber group identification number.

5. Communications system according to claim 3 or 4,
wherein the communications system is embodied such that a communication with a subscriber (10, 11, 12, 13, 14, 15, 16, 17) is effected by means of the subscriber identification number assigned to it, and/or
wherein the communications system is embodied such that a communication with a guest subscriber group (40, 41, 42, 43, 44, 45, 46, 47) is effected by means of its guest subscriber group identification number.

6. Communications system according to one of claims 1 to 5,
wherein the at least one control station (13, 14) is embodied such that the allocation of subscribers (10, 11, 12, 13, 14, 15, 16, 17) to subscriber sub groups (30, 31, 32) is effected by the control station (13, 14) assigned to the particular subscriber group (1,2, 20, 21, 22, 23).

7. Communications system according to claim 6,
wherein the communications system is embodied such that each subscriber sub group (30, 31, 32) is assigned just one subscriber sub group identification number,
wherein each subscriber (10, 11, 12, 13, 14, 15, 16, 17) which is assigned to a subscriber sub group (30, 31, 32) is assigned exactly one subscriber sub group identification number of the particular subscriber sub group (30, 31, 32),
wherein the communications system is embodied such that each subscriber (10, 11, 12, 13, 14, 15, 16, 17) which has an entitlement to a particular communications task with a particular guest subscriber group (40, 41, 42, 43, 44, 45, 46, 47) from a particular subscriber sub group (30, 31, 32) is assigned the particular guest subscriber group identification number.

8. Communications system according to claim 6 or 7,
wherein the communications system is embodied such that each subscriber sub group (30, 31, 32) corresponds to a particular fleet.

9. Communications system according to one of claims 1 to 8,
wherein the communications system is embodied such that the entitlements include the initiation of voice connections and/or the acceptance of voice connections to a subscriber (10, 11, 12, 13, 14, 15, 16, 17) and/or the acceptance of voice connections to a group of subscribers (10, 11, 12, 13, 14, 15, 16, 17) and/or the transmission of data and/or the reception of data from a subscriber (10, 11,12, 13, 14, 15, 16, 17) and/or the reception of data from a group of subscribers (10, 11, 12, 13, 14, 15, 16, 17) and/or the allocation of guest subscriber groups (40, 41, 42, 43, 44, 45, 46, 47).

10. Communications system according to one of claims 1 to 9,
wherein the communications system is embodied such that each subscriber (10, 11, 12, 13, 14, 15, 16, 17) assigned to a subscriber group (1, 2, 20, 21, 22, 23) for the first time has certain entitlements assigned to the subscriber group (1, 2, 20,21, 22, 23) to different communications tasks with particular subscribers (10, 11, 12, 13, 14, 15, 16, 17) and/or guest subscriber groups (40, 41, 42, 43, 44, 45, 46, 47) from particular subscriber groups (1, 2, 20, 21, 22, 23).

11. Communications system according to one of claims 1 to 10,
wherein the communications system is embodied such that the communication and/or the definition of the entitlements and/or the allocation of subscribers (10, 11, 12, 13, 14, 15, 16, 17) are effected encrypted.

12. Communications system according to one of claims 1 to 11,
wherein the communications system is embodied such that each subscriber group (1,2, 20, 21, 22, 23) is a virtual private communications network.

13. Method for communication by means of a communications network,
wherein the communications network has a plurality of subscribers (10, 11, 12, 13, 14, 15, 16, 17), a plurality of subscriber groups (1, 2, 20, 21, 22, 23) and at least one control station (13, 14) assigned to each subscriber group (1, 2, 20, 21, 22, 23) in each case,
wherein each subscriber (10, 11, 12, 13, 14, 15, 16, 17) is assigned to just one subscriber group (1, 2, 20, 21, 22, 23),
wherein each subscriber group (1, 2, 20, 21, 22, 23) can be assigned to a plurality of guest subscriber groups (40, 41,42, 43,44, 45, 46, 47),
wherein each subscriber (10, 11, 12, 13, 14, 15, 16, 17) has individual entitlements to different communications tasks with certain subscribers (10, 11, 12, 13, 14, 15, 16, 17) and/or guest subscriber groups (40, 41, 42,43, 44, 45, 46, 47) from certain subscriber groups (1, 2, 20, 21, 22, 23),
**characterised in that**
the definition of the entitlements and the allocation of subscribers (10, 11, 12, 13, 14, 15, 16, 17) to subscriber groups (1, 2, 20, 21, 22, 23) and/or guest subscriber groups (40, 41, 42, 43, 44, 45, 46, 47) are effected exclusively by the particular control station (13, 14) assigned to the subscriber group (1, 2, 20, 21, 22, 23) of a subscriber (10, 11, 12, 13, 14, 15, 16, 17) taking part in a communication,
and **in that** the communications network is a Tetra radio communications network.

14. Method according to claim 13,
wherein each subscriber group (1, 2, 20, 21, 22, 23) can have a plurality of subscriber sub groups (30, 31, 32),
wherein each subscriber sub group (30, 31, 32) can have a plurality of guest subscriber groups (40, 41, 42, 43, 44, 45, 46, 47), and
wherein each subscriber (10, 11, 12, 13, 14, 15, 16, 17) assigned to a subscriber group can be assigned at most to one subscriber sub group (1, 2, 29, 21, 22, 23) assigned to the subscriber group (1, 2, 20, 21, 22, 23).

15. Method according to claim 13 or 14,
wherein each subscriber (10, 11, 12, 13, 14, 15, 16, 17) is assigned at least one subscriber identification number,
wherein each subscriber group (1, 2, 20, 21, 22, 23) is assigned just one subscriber group identification number, and
wherein each guest subscriber group (40, 41, 42, 43, 44, 45, 46, 47) is assigned just one guest subscriber group identification number.

16. Method according to claim 15,
wherein each subscriber (10, 11, 12, 13, 14, 15, 16, 17) is assigned the subscriber group identification number of the subscriber group (1, 2, 20, 21, 22, 23) to which it is assigned, and/or
wherein each subscriber (10, 11, 12, 13, 14, 15, 16, 17) which has an entitlement to a particular communications task with a particular guest subscriber group (40, 41, 42, 43, 44, 45, 46, 47) from a particular subscriber group (1, 2, 20, 21, 22, 23) is assigned the particular guest subscriber group identification number.

17. Method according to claim 15 or 16,
wherein a communication with a subscriber (10, 11, 12, 13, 14, 15, 16, 17) is effected by means of the subscriber identification number assigned to it, and/or
wherein a communication with a guest subscriber group (40, 41, 42, 43, 44, 45, 46, 47) is effected by means of its guest subscriber group identification number.

18. Method according to one of claims 14 to 17,
wherein the control station (13, 14) assigned to the particular subscriber group (1, 2, 20, 21, 22, 23) effects the allocation of subscribers to subscriber sub groups (30, 31, 32).

19. Method according to claim 18,
wherein each subscriber sub group (30, 31, 32) is assigned just one subscriber sub group identification number,
wherein each subscriber (10, 11, 12, 13, 14, 15, 16, 17) which is assigned to a subscriber sub group (30, 31, 32) is assigned the subscriber sub group identification number of the particular subscriber sub group (30, 31, 32),
wherein each subscriber (10, 11, 12, 13, 14, 15, 16, 17) which has an entitlement to a particular communications task with a particular guest subscriber group (40, 41, 42, 43, 44, 45, 46, 47) from a particular subscriber sub group (30, 31, 32) is assigned the particular guest subscriber group identification number.

20. Method according to claim 18 or 19,
wherein each subscriber sub group (30, 31, 32) corresponds to a particular fleet.

21. Method according to one of claims 14 to 20,
wherein the entitlements include the initiation of voice connections and/or the acceptance of voice connections to a subscriber (10, 11, 12, 13, 14, 15, 16, 17) and/or the acceptance of voice connections to a group of subscribers (10, 11, 12, 13, 14, 15, 16, 17) and/or the transmission of data and/or the reception of data from a subscriber (10, 11,12, 13, 14, 15, 16, 17) and/or the reception of data from a group of subscribers (10, 11, 12, 13, 14, 15, 16, 17) and/or the allocation of guest subscriber groups (40, 41, 42, 43, 44, 45, 46, 47).

22. Method according to one of claims 14 to 21,
wherein each subscriber (10, 11, 12, 13, 14, 15, 16, 17) assigned to a subscriber group (1, 2, 20, 21, 22, 23) for the first time is transmitted certain entitlements assigned to the subscriber group (1, 2, 20,21, 22, 23) to different communications tasks with particular subscribers (10, 11, 12, 13, 14, 15, 16, 17) and/or guest subscriber groups (40, 41, 42, 43, 44, 45, 46, 47) from certain subscriber groups (1, 2, 20, 21, 22, 23) by the control station (13, 14).

23. Method according to one of claims 14 to 22,
wherein the communication and/or the definition of the entitlements and/or the allocation of subscribers (10, 11, 12, 13, 14, 15, 16, 17) are effected encrypted.

24. Method according to one of claims 14 to 23,
wherein each subscriber group (1, 2, 20, 21, 22, 23) is a virtual private communications network.

## Revendications

1. Système de communication comportant un réseau de communication, plusieurs abonnés (10, 11, 12, 13, 14, 15, 16, 17), plusieurs groupes d'abonnés (1, 2, 20, 21, 22, 23) et à chaque groupe d'abonnés (1, 2, 20, 21, 22, 23) est associé respectivement au moins un poste de commande (13, 14),
dans lequel chaque abonné (10, 11, 12, 13, 14, 15, 16, 17) est associé précisément à un groupe d'abonnés (1, 2, 20, 21, 22, 23),
dans lequel le système de communication est réalisé de sorte que chaque groupe d'abonnés (1, 2, 20, 21, 22, 23) peut être associé à plusieurs groupes d'abonnés invités (40, 41, 42, 43, 44, 45, 46, 47),
dans lequel le système de communication est réalisé de sorte que chaque abonné (10, 11, 12, 13, 14, 15, 16, 17) dispose d'autorisations individuelles pour différentes tâches de communication avec des abonnés déterminés (10, 11, 12, 13, 14, 15, 16, 17) et/ou des groupes d'abonnés invités (40, 41, 42, 43, 44, 45, 46, 47) appartenant à des groupes d'abonnés déterminés (1, 2, 20, 21, 22, 23),
**caractérisé en ce que**
le système de communication est réalisé de sorte que la détermination des autorisations et l'affectation d'abonnés (10, 11, 12, 13, 14, 15, 16, 17) aux groupes d'abonnés (1, 2, 20, 21, 22, 23) et/ou groupes d'abonnés invités (40, 41, 42, 43, 44, 45, 46, 47) sont effectuées exclusivement par le poste de commande respectif (13, 14) associé au groupe d'abonnés (1, 2, 20, 21, 22, 23) d'un abonné (10, 11, 12, 13, 14, 15, 16, 17) participant à une communication,
et **en ce que** le réseau de communication est un réseau de communication radio tétra.

2. Système de communication selon la revendication 1,
dans lequel le système de communication est réalisé de sorte que chaque sous-groupe d'abonnés (30, 31, 32) comporte plusieurs groupes d'abonnés invités (40, 41, 42, 43, 44, 45, 46, 47), et
dans lequel le système de communication est réalisé de sorte que chaque abonné (10, 11, 12, 13, 14, 15, 16, 17) associé à un groupe d'abonnés (1, 2, 20, 21, 22, 23) peut être associé au maximum à un sous-groupe d'abonnés (30, 31, 32) associé à un groupe d'abonnés (1, 2, 20, 21, 22, 23).

3. Système de communication selon la revendication 1 ou 2,
dans lequel le système de communication est réalisé de sorte qu'au moins un numéro d'identification d'abonné est associé à chaque abonné (10, 11, 12, 13, 14, 15, 16, 17),
dans lequel le système de communication est réalisé de sorte qu'un numéro d'identification de groupe d'abonnés est associé précisément à chaque groupe d'abonnés (1, 2, 20, 21, 22, 23), et
dans lequel le système de communication est réalisé de sorte qu'un numéro d'identification de groupe d'abonnés invités est associé précisément à chaque groupe d'abonnés invités (40, 41, 42, 43, 44, 45, 46, 47).

4. Système de communication selon la revendication 3,
dans lequel le système de communication est réalisé de sorte que le numéro d'identification de groupe d'abonnés du groupe d'abonnés qui lui est affecté (1, 2, 20, 21, 22, 23) est affecté à chaque abonné (10, 11, 12, 13, 14, 15, 16, 17), et/ou
en ce que le système de communication est réalisé de sorte que le numéro d'identification de groupe d'abonnés invités respectif est affecté à chaque abonné (10, 11, 12, 13, 14, 15, 16, 17), qui dispose d'une autorisation pour une tâche de communication avec un groupe d'abonnés invités déterminé (40, 41, 42, 43, 44, 45, 46, 47) appartenant à un groupe d'abonnés déterminé (1, 2, 20, 21, 22, 23).

5. Système de communication selon la revendication 3 ou 4,
dans lequel le système de communication est réalisé de sorte qu'une communication avec un abonné (10, 11, 12, 13, 14, 15, 16, 17) s'effectue au moyen du numéro d'identification d'abonné qui lui est affecté, et/ou
en ce que le système de communication est réalisé de sorte qu'une communication avec un groupe d'abonnés invités (40, 41, 42, 43, 44, 45, 46, 47) est effectuée au moyen de son numéro d'identification de groupe d'abonnés invités.

6. Système de communication selon l'une des revendications 1 à 5,
dans lequel le au moins un poste de commande (13, 14) est réalisé de sorte que l'association d'abonnés (10, 11, 12, 13, 14, 15, 16, 17) à des sous-groupes d'abonnés (30, 31, 32) est effectuée par le poste de commande (13, 14) associé au groupe d'abonnés respectif (1, 2, 20, 21, 22, 23).

7. Système de communication selon la revendication 6,
dans lequel le système de communication est réalisé de sorte qu'un numéro d'identification de sous-groupes d'abonnés est associé précisément à chaque sous-groupe d'abonnés (30, 31, 32),
en ce que le numéro d'identification de sous-groupes d'abonnés du sous-groupe d'abonnés respectif (30, 31, 32) est affecté à chaque abonné (10, 11, 12, 13, 14, 15, 16, 17), qui est associé à un sous-groupe d'abonnés (30, 31, 32),
dans lequel le système de communication est réalisé de sorte que le numéro d'identification de groupe d'abonnés invités respectif est affecté à chaque abonné (10, 11, 12, 13, 14, 15, 16, 17), qui dispose d'une autorisation pour une tâche de communication avec un groupe d'abonnés invités déterminé (40, 41, 42, 43, 44, 45, 46, 47) appartenant à un sous-groupe d'abonnés déterminé (30, 31, 32).

8. Système de communication selon la revendication 6 ou 7,
dans lequel le système de communication est réalisé de sorte que chaque sous-groupe d'abonnés (30, 31, 32) correspond à une flotte déterminée.

9. Système de communication selon l'une des revendications 1 à 8,
dans lequel le système de communication est réalisé de sorte que les autorisations comprennent l'initialisation d'appels vocaux et/ou l'acceptation d'appels vocaux avec un abonné (10, 11, 12, 13, 14, 15, 16, 17) et/ou l'acceptation d'appels vocaux avec un groupe d'abonnés (10, 11, 12, 13, 14, 15, 16, 17) et/ou l'envoi de données et/ou la réception de données d'un abonné (10, 11, 12, 13, 14, 15, 16, 17) et/ou la réception de données d'un groupe d'abonnés (10, 11, 12, 13, 14, 15, 16, 17) et/ou l'affectation de groupes d'abonnés invités (40, 41, 42, 43, 44, 45, 46, 47).

10. Système de communication selon l'une des revendications 1 à 9,
dans lequel le système de communication est réalisé de sorte que chaque abonné (10, 11, 12, 13, 14, 15, 16, 17) associé pour la première fois à un groupe d'abonnés (1, 2, 20, 21, 22, 23) dispose d'autorisations déterminées associées au groupe d'abonnés (1, 2, 20, 21, 22, 23) pour différentes tâches de communication avec des abonnés déterminés (10, 11, 12, 13, 14, 15, 16, 17) et/ou des groupes d'abonnés invités (40, 41, 42, 43, 44, 45, 46, 47) appartenant à des groupes d'abonnés déterminés (1, 2, 20, 21, 22, 23).

11. Système de communication selon l'une des revendications 1 à 10,
dans lequel le système de communication est réalisé de sorte que la communication et/ou la détermination des autorisations et/ou l'affectation des abonnés (10, 11, 12, 13, 14, 15, 16, 17) est effectuée de manière cryptée.

12. Système de communication selon l'une des revendications 1 à 11,
dans lequel le système de communication est réalisé de sorte que chaque groupe d'abonnés (1, 2, 20, 21, 22, 23) est un réseau de communication privé virtuel.

13. Procédé de communication au moyen d'un réseau de communication,
dans lequel le réseau de communication comporte plusieurs abonnés (10, 11, 12, 13, 14, 15, 16, 17), plusieurs groupes d'abonnés (1, 2, 20, 21, 22, 23) et au moins un poste de commande (13, 14) respectif associé à chaque groupe d'abonnés (1, 2, 20, 21, 22, 23),
dans lequel chaque abonné (10, 11, 12, 13, 14, 15, 16, 17) est associé précisément à un groupe d'abonnés (1, 2, 20, 21, 22, 23),
dans lequel chaque groupe d'abonnés (1, 2, 20, 21, 22, 23) peut être associé à plusieurs groupes d'abonnés invités (40, 41, 42, 43, 44, 45, 46, 47),
dans lequel chaque abonné (10, 11, 12, 13, 14, 15, 16, 17) dispose d'autorisations individuelles pour différentes tâches de communication avec les abonnés déterminés (10, 11, 12, 13, 14, 15, 16, 17) et/ou groupes d'abonnés invités (40, 41, 42, 43, 44, 45, 46, 47) appartenant à des groupes d'abonnés déterminés (1, 2, 20, 21, 22, 23),
**caractérisé en ce que**
la détermination des autorisations et l'affectation d'abonnés (10, 11, 12, 13, 14, 15, 16, 17) à des groupes d'abonnés (1, 2, 20, 21, 22, 23) et/ou à des groupes d'abonnés invités (40, 41, 42, 43, 44, 45, 46, 47) sont effectuées exclusivement par le poste de commande (13, 14) respectif associé au groupe d'abonnés (1, 2, 20, 21, 22, 23) d'un abonné (10, 11, 12, 13, 14, 15, 16, 17) participant à une communication, et
**en ce que** le réseau de communication est un réseau de communication radio tétra.

14. Procédé selon la revendication 13,
dans lequel chaque groupe d'abonnés (1, 2, 20, 21, 22, 23) peut posséder plusieurs sous-groupes d'abonnés (30, 31, 32),
en ce que chaque sous-groupe d'abonnés (30, 31, 32) peut posséder plusieurs groupes d'abonnés invités (40, 41, 42, 43, 44, 45, 46, 47), et
dans lequel chaque sous-groupe d'abonnés (30, 31, 32) associé au maximum à l'un du groupe d'abonnés (1, 2, 20, 21, 22, 23) peut être associé à un abonné (10, 11, 12, 13, 14, 15, 16, 17) associé à un groupe d'abonnés.

15. Procédé selon la revendication 13 ou 14,
dans lequel au moins un numéro d'identification d'abonné est associé à chaque abonné (10, 11, 12, 13, 14, 15, 16, 17),
dans lequel un numéro d'identification de groupe d'abonnés est associé précisément à chaque groupe d'abonnés (1, 2, 20, 21, 22, 23), et
dans lequel un numéro d'identification de groupe d'abonnés invités est associé précisément à chaque groupe d'abonnés invités (40, 41, 42, 43, 44, 45, 46, 47).

16. Procédé selon la revendication 15,
dans lequel à chaque abonné (10, 11, 12, 13, 14, 15, 16, 17) est affecté le numéro d'identification de groupes d'abonnés du groupe d'abonnés (1, 2, 20, 21, 22, 23) qui lui est affecté et/ou
dans lequel le numéro d'identification de groupes d'abonnés invités respectifs est affecté à chaque abonné (10, 11, 12, 13, 14, 15, 16, 17), qui dispose d'une autorisation pour une tâche de communication déterminée avec un groupe d'abonnés invités déterminé (40, 41, 42, 43, 44, 45, 46, 47) appartenant à un groupe d'abonnés déterminé (1, 2, 20, 21, 22, 23).

17. Procédé selon la revendication 15 ou 16,
dans lequel une communication avec un abonné (10, 11, 12, 13, 14, 15, 16, 17) est effectuée au moyen du numéro d'identification d'abonné qui lui est affecté et/ou
dans lequel une communication avec un groupe d'abonnés invités (40, 41, 42, 43, 44, 45, 46, 47) est effectuée au moyen de son numéro d'identification de groupes d'abonnés invités.

18. Procédé selon l'une des revendications 14 à 17,
dans lequel le poste de commande (13, 14) associé au groupe d'abonnés respectif (1, 2, 20, 21, 22, 23) effectue l'association des abonnés aux sous-groupes d'abonnés (30, 31, 32).

19. Procédé selon la revendication 18,
dans lequel un numéro d'identification de sous-groupes d'abonnés est associé précisément à chaque sous-groupe d'abonnés (30, 31, 32),
dans lequel le numéro d'identification de sous-groupes d'abonnés du sous-groupe d'abonnés respectif (30, 31, 32) est affecté à chaque abonné (10, 11, 12, 13, 14, 15, 16, 17), qui est associé à un sous-groupe d'abonnés (30, 31, 32),
dans lequel le numéro d'identification de groupes d'abonnés invités respectif est affecté à chaque abonné (10, 11, 12, 13, 14, 15, 16, 17), qui dispose d'une autorisation pour une tâche de communication déterminée avec un groupe d'abonnés invités déterminé (40, 41, 42, 43, 44, 45, 46, 47) appartenant à un sous-groupe d'abonnés déterminé (30, 31, 32).

20. Procédé selon la revendication 18 ou 19,
dans lequel chaque sous-groupe d'abonnés (30, 31, 32) correspond à une flotte déterminée.

21. Procédé selon l'une des revendications 14 à 20,
dans lequel les autorisations comprennent l'initialisation d'appels vocaux et/ou l'acceptation d'appels vocaux avec un abonné (10, 11, 12, 13, 14, 15, 16, 17) et/ou l'acceptation d'appels vocaux avec un groupe d'abonnés (10, 11, 12, 13, 14, 15, 16, 17) et/ou l'envoi de données et/ou la réception de données par un abonné (10, 11, 12, 13, 14, 15, 16, 17) et/ou la réception de données par un groupe d'abonnés (10, 11, 12, 13, 14, 15, 16, 17) et/ou l'affectation de groupes d'abonnés invités (40, 41, 42, 43, 44, 45, 46, 47).

22. Procédé selon l'une des revendications 14 à 21,
dans lequel des autorisations déterminées associées au groupe d'abonnés (1, 2, 20, 21, 22, 23) pour différentes tâches de communication avec des abonnés déterminés (10, 11, 12, 13, 14, 15, 16, 17) et/ou des groupes d'abonnés invités (40, 41, 42, 43, 44, 45, 46, 47) appartenant à des groupes d'abonnés déterminés (1, 2, 20, 21, 22, 23) sont transmises par le poste de commande (13, 14) à chaque abonné (10, 11, 12, 13, 14, 15, 16, 17) associé pour la première fois à un groupe d'abonnés (1, 2, 20, 21, 22, 23).

23. Procédé selon l'une des revendications 14 à 22,
dans lequel la communication et/ou la détermination des autorisations et/ou l'affectation des abonnés (10, 11, 12, 13, 14, 15, 16, 17) est effectuée de manière cryptée.

24. Procédé selon l'une des revendications 14 à 23,
dans lequel chaque groupe d'abonnés (1, 2, 20, 21, 22, 23) est un réseau de communication privé virtuel.
